# EUROPÄISCHE PATENTSCHRIFT

(11) **EP 2 157 158 B1**
(45) Veröffentlichungstag und Bekanntmachung des Hinweises auf die Patenterteilung: **20.07.2016**
(21) Anmeldenummer: 08014928.9
(22) Anmeldetag: 22.08.2008
(51) Int. Cl.: C10L 5/44, C10L 5/36

(54) **VERFAHREN ZUM HERSTELLEN VON PELLETS AUS NACHWACHSENDEN GROBSTÜCKIGEN FASERIGEN ROHSTOFFEN**
METHOD FOR MANUFACTURING PELLETS FROM SUSTAINABLE COARSE FIBROUS PRODUCTS
PROCÉDÉ DE FABRICATION DE PELLETS À PARTIR DE MATIÈRE BRUTES FIBREUSES À GROS GRAINS

(43) Veröffentlichungstag der Anmeldung: 24.02.2010
(73) Patentinhaber: Amandus Kahl GmbH & Co. KG, 21465 Reinbek (DE)
(72) Erfinder: Behmann, Joachim, 21465 Wentorf (DE); Buschhart, Axel, 32676 Lüdge-Elbrinxen (DE); Sitzmann, Werner, 21075 Hamburg (DE)
(74) Vertreter: Glawe, Delfs, Moll

(56) Entgegenhaltungen:
- EP-A2- 0 143 415
- WO-A-00/18572
- DE-A1- 4 325 069
- DE-A1- 10 334 645
- DE-A1- 19 537 238
- DE-A1-102004 005 034
- DE-A1-102004 030 398
- Pieter D Kofman: "The production of wood pellets Background", Coford connects - Processing / Products No.10, 1 January 2007 (2007-01-01), XP055199241, DUBLIN, Ireland Retrieved from the Internet: URL:http://www.woodenergy.ie/media/coford/ content/publications/projectreports/coford connects/ccnpellet_production.pdf [retrieved on 2015-06-30]

## Beschreibung

Die Erfindung betrifft ein Verfahren zum Herstellen von Pellets aus nachwachsenden grobstückigen faserigen Rohstoffen wie insbesondere Holz, Stroh oder Energiepflanzen, bei dem das Rohmaterial zerkleinert, dann getrocknet und anschließend in einer Matrizenpresse zu Pellets verarbeitet wird.

Nachwachsende faserartige Rohstoffe, wie insbesondere Holz, Stroh oder Energiepflanzen, werden üblicherweise nach der Ernte und der Anlieferung im Pelletierwerk im feuchten Zustand grob vorzerkleinert, getrocknet, fein nachzerkleinert und anschließend nach Zugabe von Dampf oder Wasser sowie unter Umständen von geeigneten Bindemitteln in Matrizenpressen zu Pellets (zylinderförmige Körper mit Durchmessern von in der Regel 6 bis 12 mm)verarbeitet (siehe auch Pieter D. Kofman: "The production of wood pellets", Conford connects - Processing/Products No. 10, 1. Januar 2007, Dublin, Ireland). Solche Pellets werden als Industriepellets im großen Maßstab oder kleinmaßstäblicher im Hausbrand der Verbrennung zugeführt. Die nachwachsenden Rohstoffe stehen nicht nur in Form von Holz und anderen schnell wachsenden Pflanzen in großen Mengen zur Verfügung, sondern auch in Form von Holzabfällen wie Hobelspänen und anderen Abfällen der Holzindustrie. Die CO₂-neutrale Verwendung dieser Rohstoffe zur Verbrennung ist nicht nur aus Umweltschutzgründen von großem Interesse, sondern auch angesichts der steigenden Ölpreise und des wachsenden Energiebedarfs aus wirtschaftlichen Gründen.

In DE 195 37 238 A1 ist ein Verfahren beschrieben, bei dem Pellets aus einer Mischung von Braunkohle und feuchten Biorohstoffen hergestellt werden.

Die Grobvermahlung der feuchten Rohmaterialien (z.B. Strohhäcksel oder Holzhackschnitzel der Größen G10 bis G100, überwiegend G30 oder G50) erfolgt herkömmlicherweise mit teuren, großvolumigen Hammermühlen, die mit Energieaufnahmen von 25 - 35 kWh pro Tonne des zu vermahlenden Produkts arbeiten. Solche Hammermühlen haben auch den Nachteil, dass sie mit Luftströmungen arbeiten müssen, die aufwändige Staubfilter für die Abluft erfordern. Alternativ werden in jüngster Zeit auch Zerspaner eingesetzt, die etwa gleich hohe Energien aufnehmen, allerdings hohe Wartungsarbeiten bedingen, da die zur Zerspanung eingesetzten Messer schnell verschleißen und einmal pro Schicht auszuwechseln und nachzuschleifen sind.

Die Pelletierung erfolgt in Matrizenpressen. In Matrizenpressen rollen auf einer mit Bohrungen versehenen Matrize Kollerrollen ab, die das auf der Matrize befindliche Material durch die Bohrungen drücken und dort zu Pellets verdichten (EP 0 143 415 A2). Man unterscheidet dabei zwischen Ringmatrizenpressen und Flachmatrizenpressen. Beide Pressensysteme haben sich im Rahmen der Pelletierung nachwachsender Rohstoffe, insbesondere von Stroh oder Holz, seit Jahren bewährt. Während bei Ringmatrizenpressen die drehende Matrize gleichmäßig über ihre gesamte Breite über die mitdrehenden, ortsfesten Koller abrollt, beschreiben im Falle der Flachmatrizenpresse die über der Matrize abrollenden Koller eine Kreisbewegung. Im Gegensatz zum Typ der Ringmatrizenpresse wird im letzten Falle das Material nicht nur zwischen Koller und Matrize verdichtet und durch die Löcher der Matrize zur Ausformung der gewünschten Pellets gedrückt, sondern zusätzlich einer Scherwirkung aufgrund der über die Kollerbahn unterschiedlichen Relativgeschwindigkeiten zwischen Koller und Matrize unterzogen.

Die Aufgabe der Erfindung besteht in der Schaffung eines Verfahrens der eingangs genannten Art, das zur Herstellung der Pellets weniger Energie benötigt.

Die erfindungsgemäße Lösung besteht darin, dass das gegebenenfalls in Hackern oder Häckslern grob vorzerkleinerte Material vor der Trocknung in einer ersten Matrizenpresse zerkleinert wird.

Bei einer vorteilhaften Ausführungsform wird das Material mit einem Wassergehalt von mindestens 15 bis 20 Gewichtsprozenten im Falle von Stroh und mindestens 40 bis 50 Gewichtsprozenten im Falle von Holz und anderen Materialien in der ersten Matrizenpresse zerkleinert.

Die Zerkleinerung findet also nicht wie beim Stand der Technik mit einer Hammermühle oder einem Zerspaner, sondern in einer Matrizenpresse statt. Es ist zwar bekannt, langfaserige Rohstoffe wie zum Beispiel Stroh, Teile von Pflanzen und Holzabfälle vor dem Pelletieren in einer Matrizenpresse zu zerkleinern (EP 0 143 415 A2). Dort wird aber offenbar trockenes Material zerkleinert, da sonst die unmittelbar auf die Zerkleinerung folgende Pelletierung wegen der zu hohen Feuchtigkeit des Materials nicht zu annehmbaren Pellets führen kann. Das Material würde ohne ausreichende Reibung durch die Bohrungen gelangen und daher nicht genügend zusammengepresst werden. Außerdem würde bei einem hohen Wassergehalt infolge der Erwärmung in der zweiten Pelletpresse das Material beim Austreten aus den Presskanälen, in denen hoher Druck herrscht, schlagartig verdampfen, was zu unannehmbaren Rissen der Pellets und dazu führen würde, dass diese leicht zerfallen oder insbesondere bei der weiteren Handhabung zerbröckeln. Typische Feuchtigkeitsgehalte des zu pelletierenden Materials vor der Pelletierung sind daher bei der Herstellung von Pellets aus Säge- oder Hobelspänen 10 - 15 %.

Der vorliegenden Erfindung liegt die überraschende Erkenntnis zugrunde, dass die Vermahlung der noch ursprungsfeuchten Rohware in einer Matrizenpresse, insbesondere einer Flachmatrizenpresse, alternativ zur Nassvermahlung bzw. Nasszerspanung in Hammermühlen oder Zerspanern eine Reihe von Vorteilen bietet. Dass man generell in einer Matrizenpresse Produkte vermahlen kann ist bekannt. Allerdings wird diese Vermahlung immer nur mit dem trockenen Produkt, als letzter Verfahrensschritt unmittelbar vor der Pelletierung, durchgeführt.

Bei nachwachsenden, faserigen Produkten, insbesondere Stroh oder Holz, hat sich überraschenderweise gezeigt, dass das mit einer Matrizenpresse, insbesondere einer Flachmatrizenpresse, nass (insbesondere etwa 40 - 50 % Wassergehalt im Falle von Holz) vermahlene Produkt eine gänzlich andere, für die nachfolgende Pelletierung deutlich bessere Struktur aufweist, als dies bei Einsatz von Hammermühlen oder Zerspanern der Fall ist. Während dort spanartige, längliche Produkt entstehen, werden bei der erfindungsgemäßen Vorgehensweise aufgrund der Scherkräfte zwischen Koller, Material und Matrize in einer Matrizenpresse, insbesondere einer Flachmatrizenpresse, zum Großteil faserige, fast wollige Produkte gebildet, die sich im Anschluss an die Trocknung aufgrund ihrer Struktur zu stabileren Pellets verarbeiten lassen, als dies im Falle der konventionellen Zerkleinerung der Fall ist. Auch die Trocknung des erfindungsgemäß vermahlenen Produkts erfolgt aufgrund der anderen Struktur schneller und besser als nach der Behandlung in einer Hammermühle. Die hohe Feuchtigkeit, die bei der eigentlichen Pelletierung wie erwähnt stören würde, behindert dabei die Vermahlung erstaunlicherweise nicht.

Ein großer wirtschaftlicher Vorteil des erfindungsgemäßen Verfahrens liegt auch darin, dass bei der konventionellen Nasszerkleinerung in Hammermühlen oder Zerspanern große Mengen Luft zum Betreiben diese Maschinen vonnöten sind, die sich mit Staub anreichern und in Filtersystemen gereinigt werden müssen, bevor sie an die Atmosphäre abgegeben werden können. Auf derartige Reinigungssysteme kann bei dem erfindungsgemäßen Verfahren verzichtet werden.

Die Flachmatrizenpresse ist für den Aufschlussprozess auch deshalb vorteilhaft geeignet, weil bei ihr die Kollerrollen direkt angetrieben werden können. Auf diese Weise ist gewährleistet, dass das Aufgabegut durch die erforderliche überrollende Wälzdruckbeanspruchung zerkleinert wird. Bei Kollerrollen ohne direkten Antrieb, wie z. B. bei Ringmatrizenpressen, besteht die Gefahr, dass die Kollerrollen ohne Eigenrotation schlittenartig über das feuchte Gut ohne echte Zerkleinerungswirkung rutschen.

Vorteilhafterweise werden in der Flachmatrizenpresse zylindrische und nicht etwa kegelförmige Kollerrollen verwendet, um zusätzlich die Scherwirkung aufgrund der über die Kollerbahn unterschiedlichen Relativgeschwindigkeiten zwischen Koller und Matrize zu erhalten.

Überraschenderweise hat sich gezeigt, dass bei der erfindungsgemäßen Nassvermahlung mittels einer Matrizenpresse, insbesondere einer Flachmatrizenpresse, der benötigte Energieeintrag trotz des besseren Zerkleinerungsergebnisses deutlich niedriger als bei den konventionellen schlagenden oder schneidenden Zerkleinerungsverfahren in einer Hammermühle bzw. einem Zerspaner liegt.

Sollte das Material in der ersten Matrizenpresse nicht ausreichend zerkleinert worden sein, kann es nach dem Trocknen mit einer Hammermühle weiter zerkleinert werden. Hierfür sind aber nicht mehr die oben erwähnten Hammermühlen erforderlich, da das Material auf jeden Fall genügend vorzerkleinert ist. Die Feinzerkleinerung des Materials nach der Trocknung kann vielmehr in der Regel mit weniger teuren und aufwändigen Hammermühlen, wie sie aus der Futtermittelindustrie bekannt sind, durchgeführt werden.

## Patentansprüche

1. Verfahren zum Herstellen von Pellets aus nachwachsenden grobstückigen faserigen Rohstoffen wie insbesondere Holz, Stroh oder Energiepflanzen, bei dem das Rohmaterial zerkleinert, dann getrocknet und anschließend in einer Matrizenpresse zu Pellets verarbeitet wird, **dadurch gekennzeichnet, dass** das gegebenenfalls in Hackern oder Häckslern grob vorzerkleinerte Material vor der Trocknung in einer ersten Matrizenpresse zerkleinert wird.

2. Verfahren nach Anspruch 1, **dadurch gekennzeichnet, dass** das Material mit einem Wassergehalt von mindestens 15 bis 20 Gewichtsprozenten im Falle von Stroh und mindestens 40 bis 50 Gewichtsprozenten im Falle von Holz und anderen Materialien in der ersten Matrizenpresse zerkleinert wird.

3. Verfahren nach einem der Ansprüche 1 oder 2, **dadurch gekennzeichnet, dass** die erste Matrizenpresse eine Flachmatrizenpresse ist.

4. Verfahren nach Anspruch 3, **dadurch gekennzeichnet, dass** die Kollerrollen der ersten Matrizenpresse zylindrisch sind.

5. Verfahren nach Anspruch 3 oder 4, **dadurch gekennzeichnet, dass** die Kollerrollen angetrieben werden.

6. Verfahren nach einem der Ansprüche 1 bis 5, **dadurch gekennzeichnet, dass** das Material nach dem Trocknen und vor der Verarbeitung zu Pellets in einer Hammermühle weiter zerkleinert wird.

7. Verfahren nach einem der Ansprüche 1 bis 6, **dadurch gekennzeichnet, dass** als Matrizenpresse, in der das Material zu Pellets verarbeitet wird, eine Flachmatrizenpresse verwendet wird.

8. Verfahren nach einem der Ansprüche 1 bis 6, **dadurch gekennzeichnet, dass** als Matrizenpresse, in der das Material zu Pellets verarbeitet wird, eine Ringmatrizenpresse verwendet wird.

## Claims

1. Method for producing pellets from large pieces of renewable fibrous raw materials, such as, in particular, wood, straw or energy crops, in which the raw material is comminuted, then dried and subsequently processed into pellets in a matrix press, **characterized in that** the material coarsely precomminuted, where appropriate, in hackers or choppers is comminuted, before drying, in a first matrix press.

2. Method according to Claim 1, **characterized in that** the material is comminuted in the first matrix press with a water content of at least 15 to 20 percent by weight in the case of straw and of at least 40 to 50 percent by weight in the case of wood and other materials.

3. Method according to either one of Claims 1 and 2, **characterized in that** the first matrix press is a flat matrix press.

4. Method according to Claim 3, **characterized in that** the pan-grinding rollers of the first matrix press are cylindrical.

5. Method according to Claim 3 or 4, **characterized in that** the pan-grinding rollers are driven.

6. Method according to one of Claims 1 to 5, **characterized in that** the material is further comminuted in a hammer mill after drying and before being processed into pellets.

7. Method according to one of Claims 1 to 6, **characterized in that** a flat matrix press is used as a matrix press in which the material is processed into pellets.

8. Method according to one of Claims 1 to 6, **characterized in that** a ring matrix press is used as a matrix press in which the material is processed into pellets.

## Revendications

1. Procédé de fabrication de granulés à partir de matières premières fibreuses grossières renouvelables telles qu'en particulier du bois, de la paille ou des plantes énergétiques, dans lequel la matière brute est broyée, puis séchée et ensuite transformée en granulés dans une presse à matrice, **caractérisé en ce que** la matière éventuellement pré-broyée dans des hacheurs ou des broyeurs est broyée avant séchage dans une première presse à matrice.

2. Procédé selon la revendication 1, **caractérisé en ce que** la matière est broyée dans la première presse à matrice avec une teneur en eau d'au moins 15 à 20 pour cent-poids dans le cas de la paille et d'au moins 40 à 50 pour cent-poids dans le cas du bois et d'autres matières.

3. Procédé selon l'une des revendications 1 ou 2, **caractérisé en ce que** la première presse à matrice est une presse à matrice plate.

4. Procédé selon la revendication 3, **caractérisé en ce que** les galets de broyage de la première presse à matrice sont cylindriques.

5. Procédé selon la revendication 3 ou 4, **caractérisé en ce que** les galets de broyage sont entraînés.

6. Procédé selon l'une des revendications 1 à 5, **caractérisé en ce que** la matière, après le séchage et avant la transformation en granulés, est également broyée dans un broyeur à marteaux.

7. Procédé selon l'une des revendications 1 à 6, **caractérisé en ce que**, en tant que presse à matrice dans laquelle la matière est transformée en granulés, il est utilisé une presse à matrice plate.

8. Procédé selon l'une des revendications 1 à 6, **caractérisé en ce que**, en tant que presse à matrice dans laquelle la matière est transformée en granulés, il est utilisé une presse à matrice annulaire.
